Europäisches Patentamt

European Patent Office

Office européen des brevets

(19)

(11) **EP 1 489 717 A1**

(12) **EUROPÄISCHE PATENTANMELDUNG**

(43) Veröffentlichungstag:
**22.12.2004 Patentblatt 2004/52**

(51) Int Cl.⁷: **H02J 13/00**, B61L 1/02,
B61L 3/12

(21) Anmeldenummer: **03013697.2**

(22) Anmeldetag: **17.06.2003**

(84) Benannte Vertragsstaaten:
**AT BE BG CH CY CZ DE DK EE ES FI FR GB GR
HU IE IT LI LU MC NL PT RO SE SI SK TR**
Benannte Erstreckungsstaaten:
**AL LT LV MK**

(71) Anmelder: **Siemens Schweiz AG
8047 Zürich (CH)**

(72) Erfinder:
• **Schmid, Rolf
8800 Thalwil (CH)**
• **Windisch, Arthur
8184 Bachenbülach (CH)**

(74) Vertreter: **Fischer, Michael, Dr.
Siemens AG,
Postfach 22 16 34
80506 München (DE)**

(54) **Verfahren zur Versorgung von Gleiskomponenten mit elektrischer Energie**

(57) Die Versorgung von elektronischen Komponenten (1) im Gleisbereich (3) mit elektrischer Energie ist mit Aufwand verbunden. Die an und für sich vorhandenen Bahnsicherungsanlagen sind dafür nicht vorgesehen, allgemeine Speiseaufgaben über die zur Anlage gehörenden Einheiten hinaus zu erfüllen oder eine solche Speisungsführung wegen des Risikos der unsymmetrischen Nutzung und einer damit verbundenen möglichen Störbeeinflussung nicht erlaubt. Zur Lösung dieses Problems wird ein Verfahren vorgeschlagen, das die am Gleis (3) vorhandene Infrastruktur ohne wesentliche Eingriffe nutzt. Dazu wird das durch die in den Schienen fliessenden Ströme erzeugte magnetische Feld genutzt, indem die dadurch in einer Schleife (5, 4) induzierte Spannung einer elektronischen Komponente (1) zugeführt wird und dieses dadurch mit elektrischer Energie versorgt.

**FIG 3**

EP 1 489 717 A1

**Beschreibung**

Die vorliegende Erfindung betrifft ein Verfahren zur Versorgung von elektronischen Komponenten mit elektrischer Energie nach dem Oberbegriff des Patentanspruchs 1.

Die vorliegende Erfindung betrifft das Gebiet der Eisenbahntechnik, insbesondere das Gebiet der Bahnsicherungsanlagen. Das Betreiben von elektronischen Komponenten für z.B. Bahnsicherungsanlagen in Bereichen, in welchen keine Speisung vor Ort verfügbar ist, verursacht für die Erstellung der nötigen Speiseinfrastruktur oft hohe Kosten. Vielfach sind Bahnsicherungsanlagen nicht dafür vorgesehen, allgemeine Speiseaufgaben über die zur Anlage gehörenden Einheiten hinaus zu erfüllen. Zudem ist die Speisungsführung in den Stellwerkkabeln infolge des Risikos der unsymmetrischen Nutzung und damit eines Störungseintrags auf andere Stromkreise, insbesondere zur Übertragung von Daten, nicht immer zweckmässig und teils nicht mehr erlaubt.

Die Schiene der Eisenbahn hat beim Einsatz der elektrischen Traktion eine Potentialdifferenz gegenüber der umgebenden Erde. Diese Potentialdifferenz, deren Grösse von vielen Faktoren abhängig ist, kann für die Speisung von Gleiskomponenten ausgenutzt werden. Ein solches Verfahren ist in der Schrift DE 100 41 716 A1 offenbart. Dieses Verfahren hat aber Einschränkungen wie z.B. dass isolierte Gleisabschnitte (z. B. für Gleisstromkreise und andere Detektionssysteme für Abschnitte) an die Bahnerde gelegt werden müssen. Weiter entsteht ein Eigentumsproblem bei der Nutzung ausserhalb der Trasse.

Der vorliegenden Erfindung liegt daher die Aufgabe zugrunde, Verfahren zur Versorgung von elektronischen Komponenten mit elektrischer Energie anzugeben, das die am Gleiskörper vorhandene Infrastruktur ohne wesentliche Eingriffe nutzt und eine zuverlässige Energieversorgung von elektronischen Komponenten auf einfache Art und Weise ermöglicht.

Diese Aufgabe wird erfindungsgemäss durch das im Patentanspruch 1 angegebene Verfahren und die im Patentanspruch X angegebene Anordnung gelöst.

Durch das erfindungsgemässe Verfahren, wonach

das durch über Leiter fliessende Ströme erzeugte magnetische Feld in einer mit der elektronischen Komponente gekoppelten Schleife eine Spannung induziert, die die elektronischen Komponente mit Energie versorgt,

kann die Schleife entweder durch im Gleisbereich vorhandene Elemente wie z.B. Kabel- oder Schienenabschnitte gebildet werden oder es kann die Schleife in einer vorhandenen Infrastruktur wie z.B. in einem Kabelkanal sicher untergebracht werden oder als Luftspule ausgebildet sein.

Dadurch ist ein Verfahren zur Versorgung einer elektronischen Komponente mit elektrischer Energie geschaffen , das auf einfache Weise und ohne störende Eingriffe längs eines Gleises implementiert werden kann.

Vorteilhaft mannigfache Ausführungsformen der vorliegenden Erfindungen sind in den abhängigen Ansprüchen angegeben.

Ausführungsbeispiele der Erfindung werden nachfolgend anhand der Zeichnung näher erläutert. Dabei zeigen:

Figur 1    Anordnung zur Durchführung des Verfahrens mit einer durch ein vorhandenes Kabel gebildeten Schleife;

Figur 2    Anordnung zur Durchführung des Verfahrens mit einer durch zwei vorhandene Kabel gebildeten Schleife;

Figur 3    Anordnung zur Durchführung des Verfahrens mit einer separaten Schleife, die teilweise durch eine Schiene gebildet wird;

Figur 4    Anordnung zur Durchführung des Verfahrens mit einer separaten Schleife, die in einem Kabelkanal verlegt wird;

Figur 5    Anordnung zur Durchführung des Verfahrens an einer Doppelspurstrecke;

Figur 6    Anordnung zur Durchführung des Verfahrens mit unter Nutzung des Traktionsrückstromes in einem Erdseil;

Figur 7    Anordnung zur Durchführung des Verfahrens mit einem Einleitersystem für abgesetzte Einspeisestellen;

Figur 8    Anordnung zur Durchführung des Verfahrens mit einem Zweileitersystem für abgesetzte Einspeisestellen.

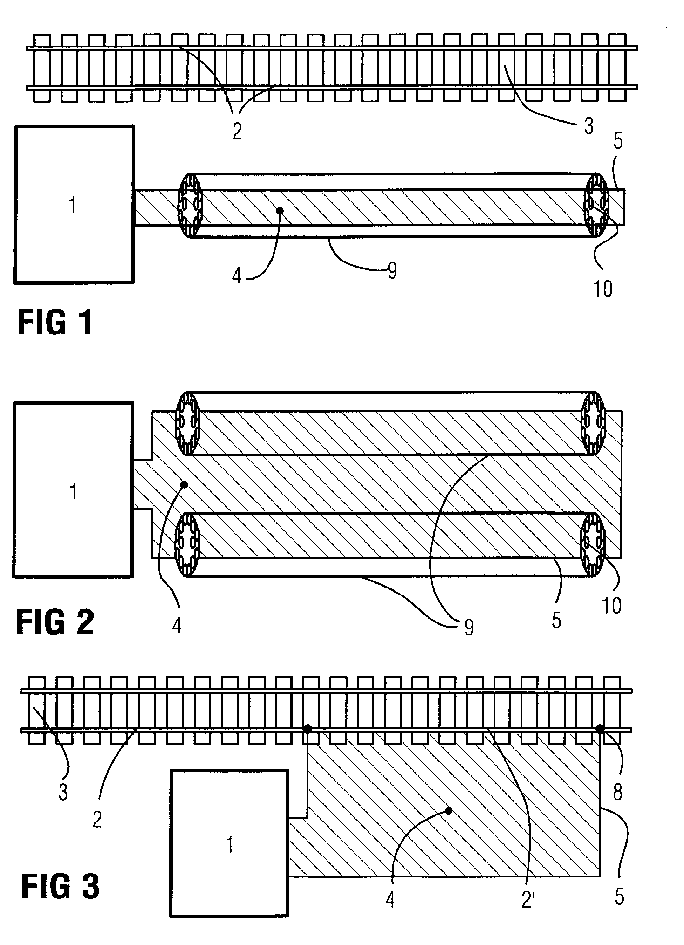

Figur 1 zeigt ein erstes Ausführungsbeispiel der Erfindung, bei der eine Schleife 5 im wesentlichen parallel zum einem Gleis 3 gelegt ist. Da vorhandene Infrastruktur weitestgehend benutzt werden soll, wird die Schleife 5 im wesentlichen durch die Leiter 10 eines nicht verdrillten Stellwerkkabels 9 gebildet. Alternativ ist auch die Verwendung von Sternvierer verseilten Kabeln oder paarweise verdrillten Kabeln möglich. Die verwendeten wie Adern dürfen dabei nicht im selben Vierer resp. im selben Paar liegen. Die wenigstens zwei Leiter 10 sind am Ende eines Kabels auf die übliche Weise galvanisch miteinander verbunden. Je nach Ausführung ist es möglich, auch je zwei oder noch mehr Leiter parallel zu schalten, um den ohmschen Widerstand zu reduzieren. Es ist deshalb ein nicht verdrilltes Stellwerkkabel 9 oder ein Kabel mit mindestens zwei verseilten Sternvierern oder verdrillten Aderpaaren erforderlich, damit das den Gleisbereich umgebende H-Feld eine Fläche 4 der Schleife 5 beaufschlagen kann. Das resultierende H-Feld wird durch Traktionsströme, die über die Schienen 2, den Fahrdraht 11 und/oder eine Leitung (nicht dargestellt in Fig. 1) fliessen. Dabei sind für die Versorgung mit Traktionsenergie die üblichen Frequen-

zen von $16^2/_3$ Hz (z.B SBB, DB) oder 50 Hz (z.B. SNCF) vorgesehen. Die Leitung kann als eine Fahrleitung oder als eine Ausgleichsleitung ausgestaltet sein. Unter Ausgleichsleitung ist eine galvanisch mit den Masten verbundene Leitung zu verstehen, die naturgemäss im wesentlichen parallel zu einem Gleis 3 verläuft. Anstelle eines Stellwerkkabels 9 kann irgend ein nicht verdrilltes Kabel oder Adern nicht im gleichen Schlag respektive Vierer verwendet werden, das beispielsweise für die Übertragung von Telefongesprächen (Streckentelefon) dient.

Für die weiteren Ausführungsformen gelten die vorgenannten Voraussetzung wie z.B. nicht verdrillte Kabel 9, Leitungen im wesentlichen parallel zum Gleis 3 und die Erzeugung eines H-Feldes durch Traktionsströme der vorgenannten Frequenzen. Diese Voraussetzung werden daher in weiteren Ausführungsformen nicht nochmals angegeben.

Im zweiten Ausführungsbeispiel gemäss der Figur 2 wird die Schleife 5 im wesentlichen durch je einen Leiter 10 zweier Kabel 9 gebildet. Die beiden Leiter 10 sind auf die übliche Weise galvanisch miteinander verbunden um die Schleife 5 zu bilden.

Das dritte Ausführungsbeispiel gemäss der Figur 3 benutzt vorhandene Infrastruktur so, indem die Schleife 5 durch einen Schienenabschnitt 2' und durch an die Enden dieses Schienenabschnittes 2' geführte Leiter gebildet wird. Die Leiter sind auf die übliche Weise an je einer Verbindungsstelle 8 galvanisch mit der Schiene verbunden. Der so über die beiden Verbindungsstellen 8 definierte Schienenabschnitt 2' braucht von den anderen Schienen- oder Gleisabschnitten nicht isoliert zu werden.

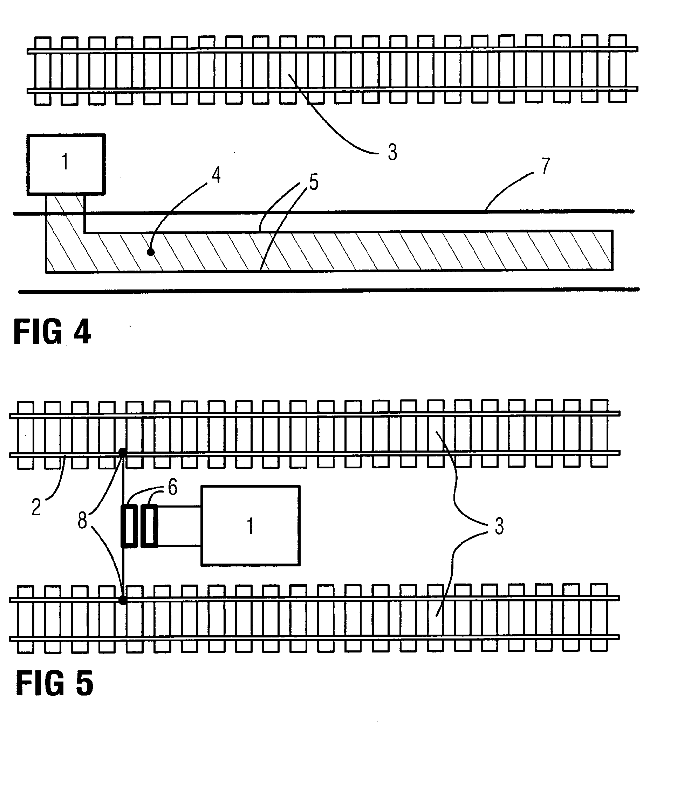

Im vierten Ausführungsbeispiel gemäss der Figur 4 wird als vorhandene Infrastruktur ein Kabelkanal 7 benutzt, in dem ein Schleife 5 ausgelegt ist. Kabelkanäle sind üblicherweise im wesentlich parallel zu einem Gleis ausgelegt.

Das Gleis 3 bzw. die Schienen 2 haben bei der elektrischen Traktion eine Potentialdifferenz gegenüber der umgebenden Erde, dabei ist der Begriff Erde elektrisch zu verstehen. Darüber hinaus besteht bei einer Doppelspur zwischen den beiden Gleisen 3 zusätzlich eine Potentialdifferenz. Diese Potentialdifferenz sind dabei transient, d.h. abhängig von der momentanen Position der Züge und vom jeweiligen Energiebedarf der Triebfahrzeuge. Im fünften Ausführungsbeispiel gemäss der Figur 5 wird ein durch diese Potentialdifferenz fliessender Ausgleichsstrom einem Stromwandler 6 zugeführt; die Sekundärwicklung - ebenfalls als Schleife 5 zu sehen - ist mit einer eisenbahntechnischen Komponente 1 zwecks Zuführung von Energie verbunden. Der Stromwandler 6 ist auf die übliche Weise an je einem Verbindungspunkt 8 mit je einer Schiene 2 der beiden Gleise 3 galvanisch verbunden.

Wie vorstehend erwähnt, sind die auftretende Potentialdifferenzen bzw. Ströme allein schon betragsmässig erheblichen zeitlichen Veränderungen ausgesetzt. Um für die zu versorgenden elektronischen Einheiten eine stabile erfindungsgemässe Versorgung zu gewährleisten, weisen diese vorteilhafterweise einen Energiespeicher auf. Dazu können je nach Energiebedarf entweder Kondensatoren oder Akkumulatoren vorgesehen werden.

Wie eingangs erwähnt, findet das erfindungsgemässe Verfahren hauptsächlich Anwendung für die AC-Traktion. Bei Bahnen mit Gleichstromversorgung ist jedoch zu berücksichtigen, dass diese Gleichspannung bzw. Gleichstrom in den meisten Fällen mit Dreiweggleichrichtung aus dem öffentlichen 50 Hz-Netz gewonnen wird. Diese Gleichspannung bzw. Gleichstrom weist dabei noch eine gewisse "Restwelligkeit" aus. Diese Restwelligkeit und die transienten Vorgänge können dabei ebenfalls gemäss dem erfindungsgemässen Verfahren genutzt werden.

Die in den Figuren angegebenen Ausgestaltungen sind nicht massstäblich zu nehmen, sondern an die jeweiligen H-Feldstärke anzupassen.

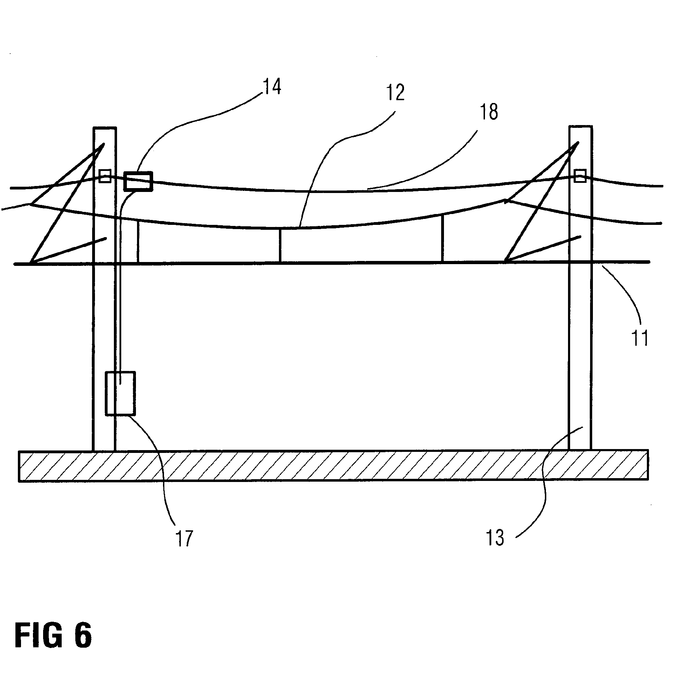

In einem sechsten Ausführungsbeispiel wird zur Durchführung des erfindungsgemässen Verfahrens gemäss der Fig. 6 der Traktionsrückstrom bzw. des dadurch generierten H-Feldes im Erdseil 18 genutzt. Fig. 6 zeigt die Anordnung des galvanisch und mechanisch mit den Masten 13 verbundenen Erdseils 18 längs einer Eisenbahnstrecke. An einer Stelle, wo eine Gleiskomponente mit Energie zu versorgen ist, wird in der unmittelbaren Nähe des betreffenden Mastens 13 eine Luftspule oder ein Stromwandler angeordnet. Die durch Induktion übertragene Energie wird einer Anschlussbox 17 zugeleitet.

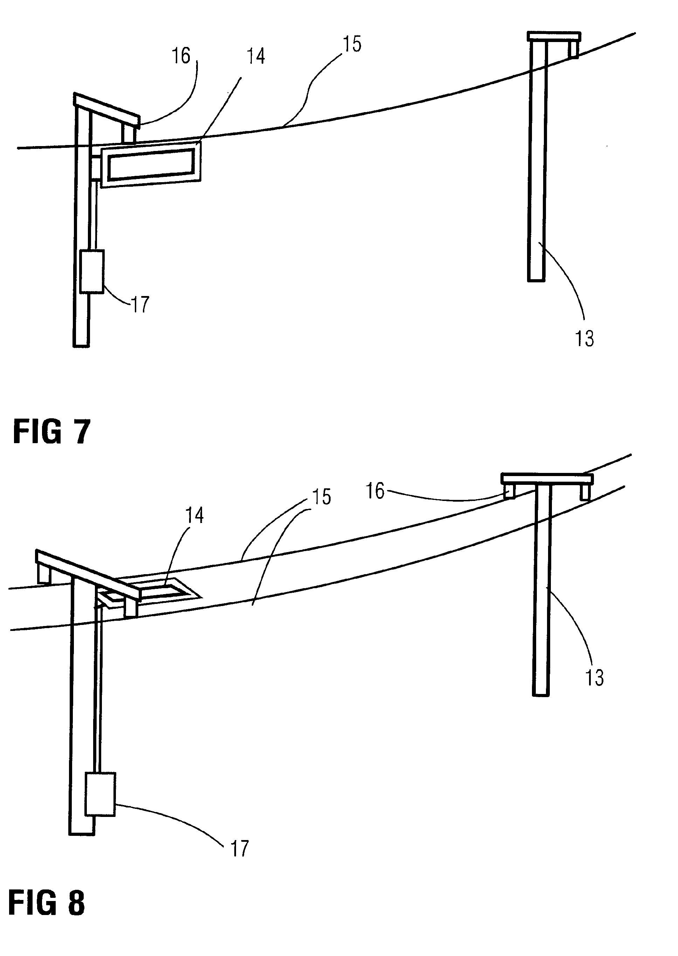

Die Figuren 7 und 8 zeigen ein siebtes Ausführungsbeispiel zur Durchführung des erfindungsgemässen Verfahrens. Der Anordnung gemäss der Figuren 7 und 8 liegen parallel zu einer Eisenbahnlinie verlegte Freileitungen 15 oder auch Energieleitungen 15. Diese Leitungen 15 dienen der Energiezuführung von z.B. einem Unterwerk zu einer abgesetzten Einspeisestelle. In Figur 7 ist ein Einleitersystem gezeigt, die Rückleitung erfolgt entweder über Erde oder ein separates Erdseil oder teilweise über Schienen. zur Versorgung einer eisenbahntechnischen, elektronischen Komponente mit elektrischer Energie ist eine Luftspule 14 vorgesehen. Die Lage ist prinzipiell frei wählbar, zur Minimierung von weiteren induktiven und mechanischen Einflüssen ist jedoch eine vertikale Lage wie in Figur 7 dargestellt bevorzugt. Die Anordnung gemäss der Figur 8 unterscheidet sich durch ein Zweileitersystem 15 zur Energieversorgung an einer abgesetzten Einspeisestelle. In diesem Ausführungsbeispiel ist zur optimalen induktiven Energieübertragung die Luftspule 14 bevorzugt horizontal angeordnet. Die Leitungen 15 sind auf die übliche Weise an Isolatoren 16 an Querträgern der Masten 13 aufgehängt. Die zu versorgenden Einheiten sind mit einer Anschlussbox 17 verbunden.

Die vorgenannten Ausführungsbeispiele sind nicht abschliessend, andere Formen der Schleifenbildung mit einer hinreichend grossen Fläche 4 können ebenfalls vorgesehen werden. Die Fläche muss wegen der Beziehung

$$U(t) \propto \int\limits_A B(t)\, dA \quad .$$

hinreichend gross sein. Dabei steht B für die Magnetische Induktion (proportional zum H-Feld) und A für die Fläche (in den Figuren mit dem Bezugszeichen 4 versehen). Die Spannung U ist dabei direkt wie die magnetische Induktion B von der Zeit t abhängig, nämlich transient wie vorstehend erläutert.

**Liste der verwendeten Bezugszeichen**

1   Zu versorgende elektronische Einheit, eisenbahntechnische Komponente
2   Schiene
3   Gleis
4   Durch Schleife aufgespannte Fläche
5   Schleife, Leiter
6   Stromwandler
7   Kabelkanal
8   Verbindungsstelle, Verbindungspunkt
9   Stellwerkkabel, Kabel
10   Leiter eines Stellwerkkabels
11   Fahrdraht
12   Abspannung
13   Mast
14   Stromwandler, Luftspule
15   Freileitung, Energieleitung entlang einer Bahnlinie
16   Isolatoren
17   Anschlussbox
18   Erdseil

**Liste der verwendeten Abkürzungen**

AC       alternating current, Wechselstrom
DB       Deutsche Bahn AG
SBB      Schweizerische Bundesbahnen
SNCF     Société Nationale des chemins de fer
Hz       Hertz, Masseinheit für Frequenz

**Patentansprüche**

1.   Verfahren zur Versorgung von einer im Gleisbereich eines Gleises (3) angeordneten elektronischen Komponente (1) mit elektrischer Energie, wobei auf dem Gleis verkehrende Züge über ein Leiter (3, 11, 12, 15, 18) mit elektrischer Energie versorgt werden,
     **dadurch gekennzeichnet dass**
     das durch über Leiter (3, 11, 12, 15, 18) fliessende Ströme erzeugte magnetische Feld in einer mit der elektronischen Komponente (1) gekoppelten Schleife (4, 14) eine Spannung induziert, die die elektronischen Komponente (1) mit Energie versorgt.

2.   Verfahren nach Anspruch 1,
     **dadurch gekennzeichnet, dass**
     die Energie in einem Speicher der elektronischen Komponente (1) oder in einer Anschlussbox (17) gespeichert wird.

3.   Verfahren nach Anspruch 2,
     **dadurch gekennzeichnet, dass**
     der Speicher als Akkumulator oder als Kapazität ausgebildet ist.

4.   Verfahren nach einem der Ansprüche 1 bis 3,
     **dadurch gekennzeichnet, dass**
     der Leiter als Erdseil (18) ausgebildet ist, das längs dem Gleis (3) angeordnet und an Fahrleitungsmasten (13) befestigt ist und die Schleife als Stromwandler (14) ausgeführt ist, der an einem Masten (13) befestigt ist.

5.   Verfahren nach einem der Ansprüche 1 bis 3,
     **dadurch gekennzeichnet, dass**
     die Schienen (2) des Gleises (3) als Leiter dienen und die Schleife (4) durch Adern eines im wesentlichen parallel zum Gleis (3) angeordneten Kabels (9) gebildet wird.

6.   Verfahren nach einem der Ansprüche 1 bis 3,
     **dadurch gekennzeichnet, dass**
     die Schienen (2) des Gleises (3) als Leiter dienen und die Schleife (4) durch Adern zweier im wesentlichen parallel zum Gleis (3) angeordneten Kabeln (9) gebildet wird.

7.   Verfahren nach einem der Ansprüche 1 bis 3,
     **dadurch gekennzeichnet, dass**
     die Schleife (5) einen Schienenabschnitt (2') des Gleises (3) enthält.

8.   Verfahren nach einem der Ansprüche 1 bis 3,
     **dadurch gekennzeichnet, dass**
     die Leiter Teil einer parallel zu den Gleisen (3) geführten Freileitung (15) sind und die Schleife (5) durch eine Luftspule (14) oder einen Stromwandler gebildet wird, wobei die Luftspule (14) bzw. der Stromwandler an einem Masten (13) befestigt sind.

9.   Verfahren nach Anspruch 8,
     **dadurch gekennzeichnet, dass**

die Luftspule (14) im Fall eines einzigen Leiters vertikal angeordnet ist und im Fall zweier Leiter horizontal angeordnet ist.

10. Verfahren nach einem der Ansprüche 1 bis 3, **dadurch gekennzeichnet, dass** Ausgleichsströme zwischen zwei Gleisen (3) einem Stromwandler (6) zugeführt werden und dass die im Stromwandler (6) induzierte Spannung der elektronischen Komponente (1) zugeführt wird.

11. Verfahren nach Anspruch 10, **dadurch gekennzeichnet, dass** der Stromwandler (6) mit je einer Schiene (2) zweier Gleise (3) verbunden ist.

**FIG 1**

**FIG 2**

**FIG 3**

**FIG 4**

**FIG 5**

**FIG 6**

**FIG 7**

**FIG 8**

| | Europäisches Patentamt | EUROPÄISCHER RECHERCHENBERICHT | Nummer der Anmeldung<br>EP 03 01 3697 |

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | DE 196 20 127 A (BAYER STEFAN DIPL ING) 20. November 1997 (1997-11-20) * Spalte 5, Zeile 9 - Spalte 5, Zeile 56 * * Spalte 8, Zeile 39 - Spalte 8, Zeile 52; Abbildungen 1,2,4-7 *<br>--- | 1-3,5-7 | H02J13/00 B61L1/02 B61L3/12 |
| X | US 3 422 262 A (BROCKMAN LYLE) 14. Januar 1969 (1969-01-14) * Spalte 1, Zeile 30 - Spalte 1, Zeile 61; Abbildungen 2,3 *<br>--- | 1-4 | |
| X | US 2 220 494 A (PLACE WILLARD P) 5. November 1940 (1940-11-05) * Spalte 1, Zeile 36 - Spalte 2, Zeile 14; Abbildung 1 *<br>--- | 1,7,10, 11 | |
| A | GB 2 335 546 A (PAINTER DAVID JAMES ;GALLON IAN LEONARD (GB)) 22. September 1999 (1999-09-22) * Seite 2, Absatz 4 - Seite 3, Absatz 2; Abbildungen 1,5 *<br>--- | 8,9 | RECHERCHIERTE SACHGEBIETE (Int.Cl.7) |
| A | WO 00 04392 A (SWAIN JONATHAN PAUL ;HONEYWELL LTD (AU)) 27. Januar 2000 (2000-01-27) * Seite 1, Zeile 20 - Seite 2, Zeile 13; Abbildungen 1,3 *<br>----- | 8,9 | H02J B61L |

Der vorliegende Recherchenbericht wurde für alle Patentansprüche erstellt

| Recherchenort | Abschlußdatum der Recherche | Prüfer |
|---|---|---|
| MÜNCHEN | 11. November 2003 | Janhsen, A |

EPO FORM 1503 03.82 (P04C03)

**ANHANG ZUM EUROPÄISCHEN RECHERCHENBERICHT
ÜBER DIE EUROPÄISCHE PATENTANMELDUNG NR.** EP 03 01 3697

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-11-2003

| Im Recherchenbericht angeführtes Patentdokument | Datum der Veröffentlichung | Mitglied(er) der Patentfamilie | Datum der Veröffentlichung |
|---|---|---|---|
| DE 19620127 A | 20-11-1997 | DE 19654911 A1<br>DE 19654912 A1<br>DE 19620127 A1 | 20-11-1997<br>27-11-1997<br>20-11-1997 |
| US 3422262 A | 14-01-1969 | DE 1605395 A1<br>GB 1171991 A<br>NL 6701574 A | 25-03-1971<br>26-11-1969<br>02-08-1967 |
| US 2220494 A | 05-11-1940 | KEINE | |
| GB 2335546 A | 22-09-1999 | KEINE | |
| WO 0004392 A | 27-01-2000 | AU 4888999 A<br>WO 0004392 A1 | 07-02-2000<br>27-01-2000 |

EPO FORM P0461

Für nähere Einzelheiten zu diesem Anhang : siehe Amtsblatt des Europäischen Patentamts, Nr.12/82